# EUROPEAN PATENT SPECIFICATION

(11) **EP 2 676 333 B1**
(45) Date of publication and mention of the grant of the patent: **13.09.2017**
(21) Application number: 12706944.1
(22) Date of filing: 13.02.2012
(51) Int. Cl.: H01R 13/518, B60R 16/023

(54) **ELECTRIC JUNCTION BOX HAVING DIVISIBLE BLOCK**
ELEKTRISCHER ANSCHLUSSKASTEN MIT TEILBAREM BLOCK
BOÎTIER DE JONCTION ÉLECTRIQUE PRÉSENTANT UN BLOC DIVISIBLE

(30) Priority: 14.02.2011 JP 2011028221
(43) Date of publication of application: 25.12.2013
(73) Proprietor: Yazaki Corporation, Minato-ku Tokyo 108-8333 (JP)
(72) Inventor: MIYAZAKI, Yoshiya, Kosai-shi, Shizuoka 431-0431 (JP); FUJISHIRO, Kazuyoshi, Kosai-shi, Shizuoka 431-0431 (JP); INOUE, Hiromichi, Kosai-shi, Shizuoka 431-0431 (JP)
(74) Representative: Grünecker Patent- und Rechtsanwälte PartG mbB
(86) International application number: PCT/JP2012/000930
(87) International publication number: WO 2012/111299

(56) References cited:
- US-A- 5 634 824
- US-A1- 2005 136 707
- US-A1- 2006 258 186

## Description

### Technical Field

This invention relates to an electric junction box having divisible block accommodating two junction blocks together in a frame of the electric junction box utilized for an automobile.

### Background Art

Conventionally, various figures have been proposed as an electric junction box having divisible block accommodating two junction blocks integral with each other in a synthetic-resin-made frame of the electric junction box.

For example, described in PTL 1 is to accommodate two cassette blocks in parallel from side to side in a junction box body (or frame), to thread-fasten a terminal with electric wire to a downside of each the cassette block with bolt and nut, to mount fuse on an upside of each the cassette block, and to connect the terminal with electric wire to the fuse.

There is also described in PTL 2 accommodating two fuse blocks (or junction blocks) in parallel in a junction box body (or frame), and connecting both the fuse blocks with each other to a conductive metal bus bar.

US 2005/136707, family document of PTL 3, discloses an arrangement similar to that as defined within the preamble of claim 1. Furthermore, described in PTL 3 is to accommodate two electric junction box bodies (or junction blocks) in parallel in an outer cover(or frame), and while fixing both the electric junction box to each other with locking part and locked part, to fix them to locking part of the outer cover.

### Citation List

### Patent Literature

PTL 1: Japanese Patent Application Laid-Open Publication No. H9-293,973
PTL 2: Japanese Patent Application Laid-Open Publication No. 2006-320,147
PTL 3: Japanese Patent Application Laid-Open Publication No. 2005-160,246

### Summary of Invention

### Technical Problem

However, with the above-mentioned conventional electric junction box having divisible block, e.g., when fixing (or connecting) LA terminal with electric wire (i.e., round plate terminal) to the one of junction blocks and locking from above the LA terminal in the other junction block of the one junction block, there has been a concern that work for visual confirmation of whether a thread-fastened part of the LA terminal is securely fixed is laborious. There has also been another concern that when, e.g., applying large electrical current with the LA terminal, the LA terminal is overheated between both the junction blocks. There has also been another concern that when locking both the junction blocks in each other, it is difficult to engage smooth locking into each other.

In view of the aforementioned problem, an object of the invention is to provide an electric junction box having divisible block that allows to readily confirm connection state of thread-fastened part of the LA terminal with two junction blocks integral with each other, prevent overheat of the LA terminal between both the junction blocks, and smoothly and securely lock in to both the junction blocks.

### Solution to Problem

In order to attain the above object, the invention provides an electric junction box having divisible block as recited in claim 1. A junction box disclosed herein is characterized by comprising: a frame; a first junction block and a second junction block accommodated together from side to side in the frame, the second junction block being positioned to project higher than the first junction block; a thread-fastening member thread-fastening a first terminal with electric wire to a terminal in the first junction block, the thread-fastening member being positioned exposed down the second junction block; and a pair of front and rear locks for locking the first junction block and the second junction block to each other arranged vertically to be displaced.

By virtue of the above configuration, while two junction blocks composed of the first junction block and the second junction block are locked in each other, the thread-fastening member for the first terminal with electric wire is exposed outward, which allows itself to be visually confirmed, and to release heat outward. Vertical displacement of both the junction blocks causes concern that locking force against external force of both the junction blocks in a side-to-side direction (or opening direction) decreases, but vertical displacement of each of the front and rear locks of both the junction blocks enhances locking force against the external force in the side-to-side direction, resolving the above concern. Locking in to each other after e.g., lower locking parts of both the junction blocks also enables upper locking parts to automatically lock in to each other.

The electric junction box having divisible block in claim 2 is characterized by the fact that in the electric junction box having divisible block recited in claim 1, a second terminal with electric wire thread-fastened to a terminal base of the first junction block is surrounded by an isolating wall of the frame upstanding around the terminal base and positioned adjacent to an isolating outer wall of the second junction block.

BY virtue of the above configuration, location of the second junction block higher than the first junction block allows the second terminal with electric wire to be isolated from outside by the isolating wall of surrounding frame of the terminal base of the first junction block and the isolating outer wall of the second junction block, resulting in enhancing isolation performance.

### Advantageous Effects of Invention

According to the invention recited in claim 1, it is made possible that while integrating both the two junction blocks engagement state of the thread-fastening member for the first terminal with electric wire is readily confirmed, overheat of the first terminal with electric wire between both the junction blocks is prevented, and locking both the junction blocks is smoothly and securely made.

According to the invention recited in claim 2, it is made possible that enhancement of isolation of the second terminal with electric wire by the isolation wall of the frame and the isolation outer wall of the second terminal protects electric components in each the junction block from large leak current through the second terminal with electric wire.

### Brief Description of Drawings

[fig.1]FIG. 1 is an exploded perspective view illustrating one embodiment of an electric junction box having divisible block according to the present invention.
[fig.2]FIG. 2 is a perspective view illustrating a state of assembly of the electric junction box having divisible block.
[fig.3]FIG. 3 is a plane view illustrating a state of assembly of the electric junction box having divisible block.
[fig.4]FIG. 4 is a cross-sectional view taken along A-A in FIG. 3 including a state of connection of the first LA terminal.
[fig.5]FIG. 5 is a plane view illustrating a first junction block.
[fig. 6] FIG. 6 is a plane view illustrating a second junction block along with a second LA terminal.
[fig.7]FIG. 7 is plane view illustrating a state of integration of both the junction blocks.
[fig.8]FIG. 8 is a perspective view illustrating a state of thread-fastening connection of the second LA terminal after integration of both the junction blocks.
[fig.9]FIG. 9 is a front view taken from an arrow D in FIG. 6.
[fig.10] FIG. 10 is a front view taken from an arrow B in FIG. 5.
[fig.11]FIG. 11 is a front, or back, view taken from an arrow C in FIG. 6.

### Description of Embodiments

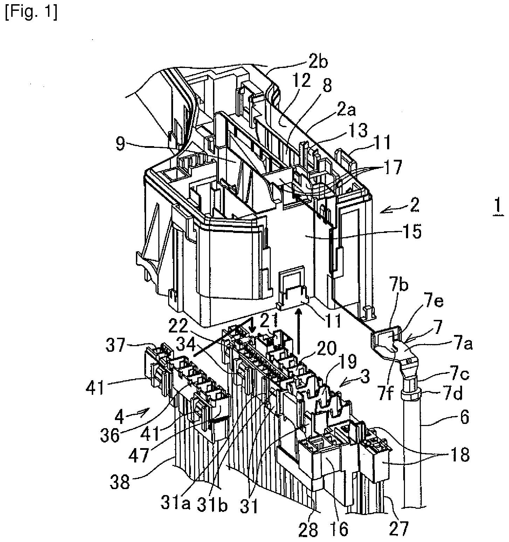

FIGS. 1 to 11 show one embodiment of an electric junction box having divisible block according to the present invention.

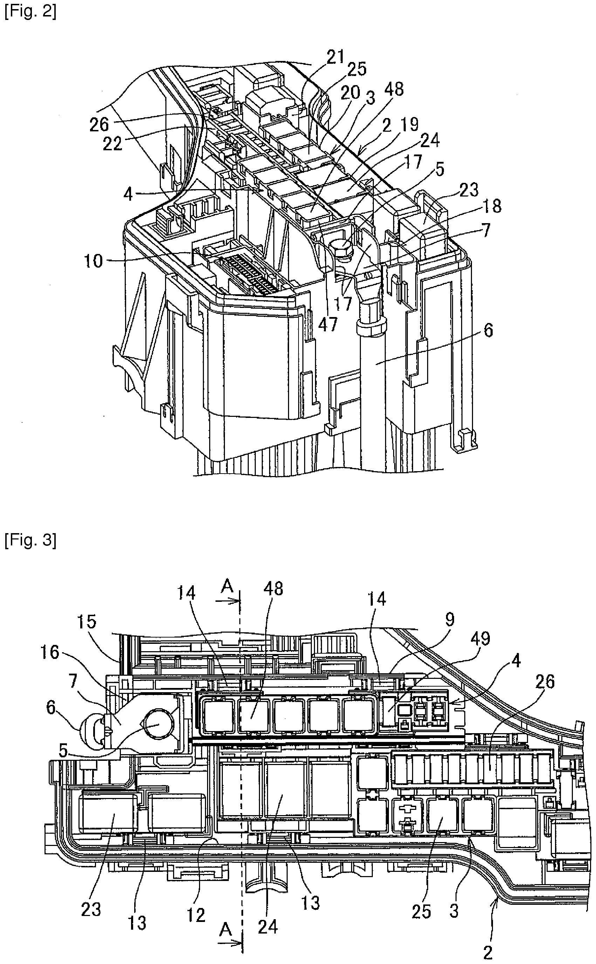

As shown in FIG. 1 an electric junction box 1 includes a synthetic-resin-made frame 2, two junction blocks 3, 4 (i.e., a first and a second ones) that is inserted into the frame 2 from underneath, and an LA terminal 7 with an electric wire 6, or a second LA terminal, that is connected with a first junction block 3 with a bolt 5 from above as shown in FIG. 2.

Both the junction blocks 3, 4, while integrated to each other in a side-to-side direction, or width direction, is inserted into the frame 2. The frame 2 consists of a front broad part 2a that is generally rectangle-shaped and a back narrow part 2b following the broad part 2a, and has a inner space 8 vertically being passed through, or having an upper opening and a lower opening.

Inside the broad part 2a of the frame 2, the two junction blocks 3, 4 as shown in FIGS. 1, 2 are accommodated in parallel from side to side in the space 8, i.e., right side space, in an extending direction of the narrow part 2b. In a nearly middle of the broad part 2a in a width direction a vertical partition wall 9 is provided to compart both the junction blocks 3, 4 and the other left side junction block 10 in FIG. 2. A description about the other junction block 10 will be abbreviated. Outside the frame 2 lock 11 is provided to correspond to an upper cover and a lower cover, not shown, made of synthetic resin.

As shown in FIGS. 1,3, inside one side wall 12 of the frame 2 a lock 13 is provided to correspond to the first junction block 3, and inside the partition wall 9 a lock 14 in FIG. 3 is provided to correspond to the second junction block 4. Adjacent to the partition wall 9 and a front wall 15 of the frame 2, i.e., adjacent to intersection of the partition wall 9 and the front wall 15, a terminal base 16 on which the LA terminal 7 with the electric wire 6 is fastened with bolt is provided in the first junction block 3. Inside the terminal base 16 a not-shown nut is disposed, and above the nut, i.e., a conductive metal-plate horizontal part of a not-shown bus bar is disposed.

At upper right, upper left, and lower the terminal base 16 an isolation-resin-made isolation wall 17 upstands from the frame 2. The isolation wall 17 upstands higher than a frame-shaped hook 7b of a tip of an electric contact 7 a of the LA terminal 7. At upper front of the terminal base 16 the isolation wall 17 is opened and extends to the front wall 15 of the frame 2. As shown in FIGS. 2, 3 the electric contact 7a of the LA terminal 7 is accommodated within the three-side isolation wall 17 so as to be well isolated. Herein, direction of right, left, front or back is expediential for description.

As shown in FIG. 1, the LA terminal 7 is an available part, bent into U-shape, including a crimp, or connection part, 7c corresponding to a core wire, a crimp 7d corresponding to an isolating cover of the vertical electric wire 6, a parallel contact plate 7a, a frame-shaped hook 7b upstanding on a tip of the contact plate 7a, and a slit 7f arranged between an opening 7e of the hook 7b and the contact plate 7a. The hook 7b serves as provisional lock prior to bolt-fastening. The LA terminal 7 is applied with large current because of connection with an alternator or a battery.

As shown in FIGS. 1 and 2, the first junction block 3 is formed about twice longer than the second junction block 4 in a front and rear direction. The first junction block 3 is provided with two front and rear relay connection parts 18 in front and right, a terminal base, or an LA terminal connection part, 16 in front and left, a plurality, e.g., three, herein, of large FL connection part, or fusible link, 19 in a middle in a longitudinal direction, a small FL connection part 20 backward in the longitudinal direction, a large FL connection part 21 arranged at a back end of the small FL connection part 20, and a small blade-type fuse connection part 22 arranged in parallel along a left side of the small FL connection part 20.

As shown in FIG. 2, to both the junction blocks 3,4 introduced into the frame 2, a relay 23, large and small FLS 24, 25, or a fuse 26 are mounted and connected, and the LA terminal 7 with electric wire is then fastened with bolt 5.

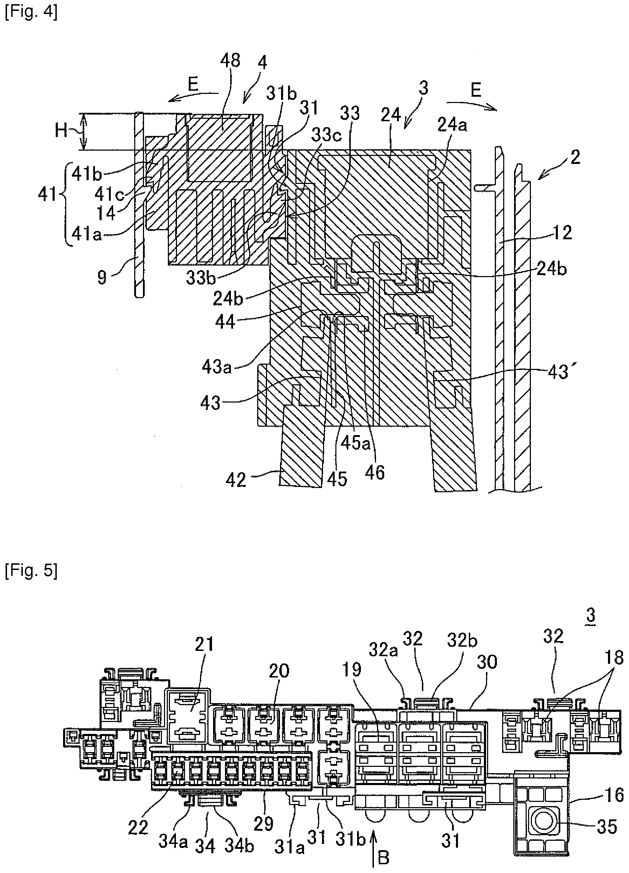

As shown in FIG. 4, illustrating cross-sectional view taken along A-A, the fusible link 24 is conventionally available, having a not-shown fusible member in a isolation-resin-made case 24a, and projecting a pair of male-terminals, or terminals, 24b that are extended from the fusible member downward from the case 24a. The blade-type fuse 26 in FIG. 2 is also conventionally available, having a fusible member inside isolation resin material, projecting down a pair of male terminals from the isolation resin material. The relay 23, the FLS 24, 25, and the fuse 26 are called as electric components, connection parts 18 to 22 attachment parts.

As shown in FIG. 1, the relay connection part 18 includes, i.e., four female terminals with electric wire 27, not shown, inside an isolation-resin housing, substituted by the reference sign 18, and a male terminal of the relay 23 (in FIG. 2) is connected with a male terminal with electric wire 27. The FL connection parts 19 to 21 and the fuse connection part 22 each include two female terminals with electric wire 28, not shown, and a pair of male terminals of the FLS 24, 25 (in FIG, 2) or the fuses (in FIG. 2) is connected with the female terminals with electric wire 28.

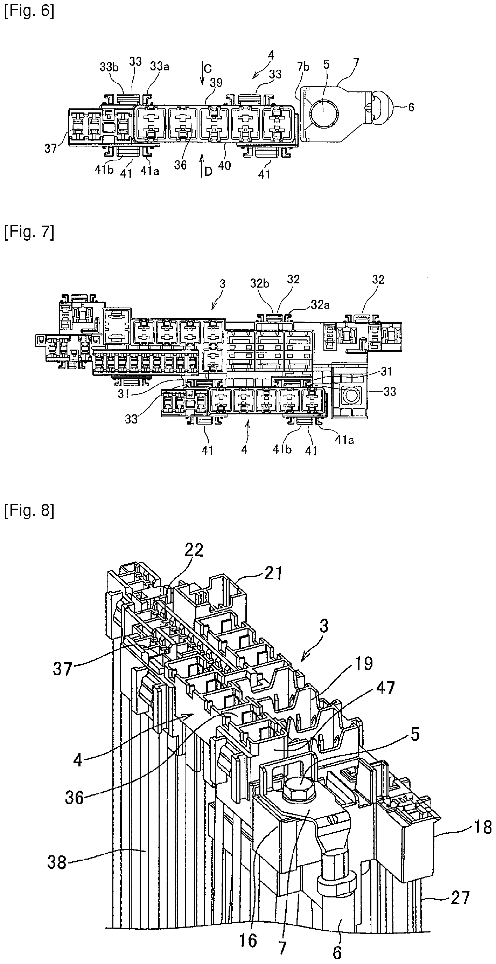

The isolation-resin housings 18 to 22 are each integrated to form the first junction block 3, substituted by the reference sign 3, and the junction block main body and each the terminal with electric wire compose the junction block 3. As shown in FIG. 5, outside a right and a left wall 29, 30 of the junction block main body 3, locks 31, 32 are disposed. The right side lock 32 is engaged with the lock 13 of the frame 2 (in FIG. 1), the left side lock 31 a right side lock 33 of the second junction block 4 in FIG. 6.

As shown in FIGS. 1 , 4 and 5, the left side lock 31 of the first junction block 3 includes a pair of front and rear rails 31a, L-shaped in cross-section, and a projection 31b located between the pair of rails 31a, and the projection 31b includes an upper inclined side and a lower nearly-horizontal locking side. On the left back of the first junction block 3, a downward flexible lock arm 34b is arranged between a pair of front and rear rails 34a as a lock 34 corresponding to the frame 2. The right side lock 32 in FIG. 5 is a downward flexible lock arm 32b arranged between a pair of rails 32a. The reference sign 35 in FIG. 5 shows a nut of a terminal base 16.

As shown in FIGS. 1, 6, the second junction block 4 includes a plurality (e.g., five, herein) of small FL connection parts 36 aligned in a front and rear direction, and a back side blade-type fuse connection part 37. The isolation-resin-made junction block main body, substituted by reference sign 4, and a terminal with electric wire 38 (not-shown) accommodated in housings of the connection parts 36, 37 compose a second junction block 4. FIG. 6 is shown in further enlarged manner than FIG. 5 (the first junction block 3).

Outside a right side wall 39 of the second junction block 4 a pair of front and rear locks 33 corresponding to the first junction block 3 is disposed, the locks 33 is composed of a pair of front and rear cross-sectional L-shaped rails 33a and an upward flexible lock arm 33b between the rails 33a. As shown in FIG. 4, the upward lock arm 33b upstands upward from a lower end side of the junction block 4, at an upper end of which is disposed a projection 33c that engages with the projection 31b of the first junction block. The projection 31b has an upper inclined side and a lower nearly-horizontal locking side, and the projection 33c has an upper nearly-horizontal locking side and a lower inclined side.

Outside a left wall 40 of the second junction block 4 a downward lock arm 41b is disposed as a lock 41 between a pair of front and rear cross-sectionally L-shaped rails 41a. As shown in FIG. 4, the downward lock arm 41b droops from upper end side of the junction block 4, at lower outside of which is disposed a projection 41c that engages with the projection 14 of the partition wall 9 of the frame 2. The projection 14 has an upper locking side and a lower inclined side, and the projection 41c has an upper inclined side and a lower locking side. Locking sides of the right and left projections 31b, 14 in FIG. 4 are arranged in nearly the same height, at lower side of the second junction block 4 the right side (i.e., upward) lock arm 33b is located, and at upper side thereof the left side (i.e., downward) lock arm 41b is located.

The second junction block 4, from a state of FIG. 1, slides and engages from above as shown by the arrow with the first junction block 3, and then is located to project upper than the first junction block 3 by a size H. Sliding engagement is made by mutual sliding movement of the rails 31a, 33a (in FIGS. 5 and 6), and at the same time the projection 31b (in FIG. 5) and the lock arm 33b (in FIG. 6) are engaged. Upper end of the partition wall 9 in FIG. 4 is arranged in the same horizontal plane as that of the second junction block 4, and upper end of the first junction block 3 is arranged in nearly the same horizontal plane as that of the right wall 12 of the frame 2.

As shown in FIG. 4, a lower end of the second junction block 4 is arranged in nearly the same horizontal plane as that of the large FL 24 of the first junction block 3, and at lower side of the second junction block 4 the left LA terminal 43 with the electric wire 42 is fastened to be connected to the first junction block 3 with a horizontal bolt (or a thread-fastening member). The left LA terminal 43 contacts the down left side tube-shaped (male) terminal 24b of large FL 24 via, e.g., the bus bar 45 for power supply or earth, and the bolt 44 is passed through a hole 43a of LA terminal 43, a hole 45a of the bus bar 45 and a hole of the terminal 24b, and is thread-fastened into an inner nut 46. A right side LA terminal with electric wire directly contacts the left side tab-shaped terminal 24b of the FL 24 to be also thread-fastened with a bolt without via a bus bar.

Since the left LA terminal 43 and the fastening bolt 44 is exposed outward down the second junction block 4, while the first and the second junction blocks 3, 4 are integrated with each other, the operator can visually confirm a state of fastening of the LA terminal 43 readily and securely. In addition, even if the LA terminal 43 or the bolt 44 is heated during power supply, good heat radiation prevents overheat, so that reliability of electric connection improves. This results from the arrangement in which the second junction block 4 is located to project upper than the first junction block 3 by the size H.

As shown in FIGS. 2, 3, on the second junction block 4 the small FL 48 and the fuse 49 are mounted to be connected. FIG.7 shows a state in which the first junction block 3 in FIG. 5 and the second junction block 4 are integrated to each other, and FIG.8 shows a state in which the second LA terminal 7 with the electric wire 6, after integration of the first and second junction block 3, 4, is fastened with the bolt 5 to the front end left terminal base 16 of the first junction block 3 in FIG. 7.

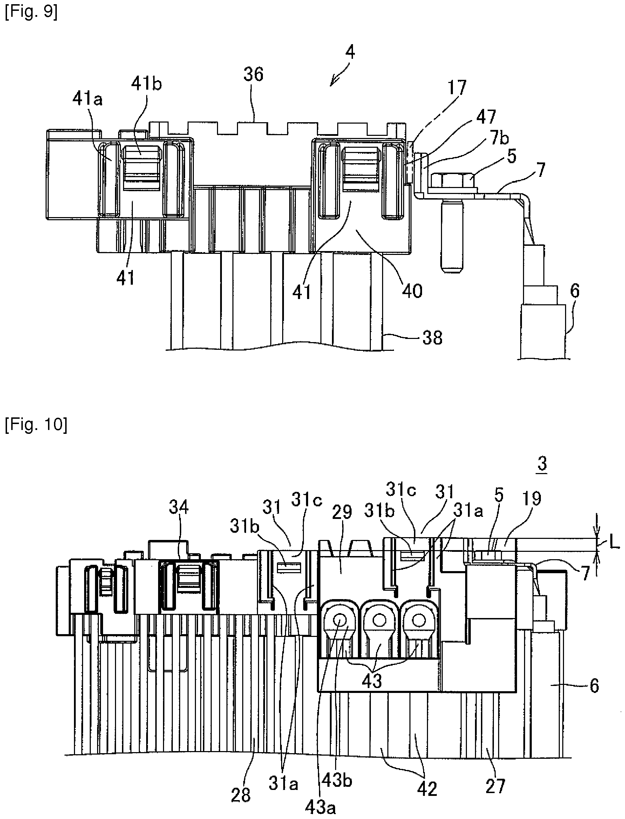

As shown in FIG. 6, the second LA terminal 7 is positioned near a front end of the second junction block 4, and the second junction block 4, as shown in FIG. 8, is positioned to project upper than the first junction block 3, while the second junction block 4, as shown in FIG. 9, i.e., in a front view taken from an arrow D, left side in FIG. 6, is positioned higher than the LA terminal 7, the second LA terminal 7 is therefore isolated by both the isolation wall 17 of the frame 2 surrounding the terminal base 16, shown in FIGS. 2, 9, and an isolated housing wall (isolation outer wall) 47 in front end of the second junction block 4, shown in FIGS. 8, 9, so as to exert good isolation performance. Electric components such as the FL 48 near the LA terminal for large current are thereby protected from leak current thereof.

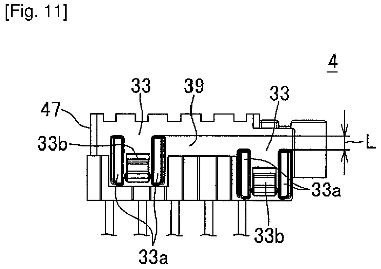

A front view taken from an arrow B on the left of the FIG. 5 is shown in FIG. 10, a front view taken from an arrow C on the right of the FIG. 6 in FIG. 11. As shown in FIG. 9, i.e., a front view taken from an arrow D on the left of the FIG. 6, a pair of front and rear locks 41 of the left side wall 40 of the second junction block 4 each has the same height.

As shown in FIG. 10, a pair of front and rear locks 31 of the left wall 29 of the first junction block 3 is positioned vertically to be displaced, and a pair of front and rear locks 33 of the right wall 39 of the second junction block 4, as shown in FIG. 11, is accordingly arranged vertically to be displaced. A vertical displacement quantity is shown as a reference sign L in FIGS. 10, 11. The vertical displacement quantity L of each FIG. 10 and 11 is the same as that of the other.

The lock 31 in FIG. 10 is composed of the pair of front and rear rails 31a and the projection 31b therebetween, which the projection 31b, as shown in Fig. 4, has an upper sloped side and a lower nearly-horizontal lock side. The lock 33 in FIG. 11 is composed of the pair of front and rear rails 33a and the upward lock arm 33b therebetween, which the lock arm 33b, as shown in FIG. 4, has an upward nearly-horizontal lock side and a lower sloped side.

The front side higher lock 31 in FIG. 10 is projected upward along with the vertical wall 31c between the front and rear rails 31a, an upper end of which the rails 31a and the wall 31c is positioned the same horizontal plane as that of the large FL connection part 19. The back lower lock 31 in FIG. 10 is slightly projected upward along with the vertical wall 31c between the pair of front and rear rails 31a, an upper end of which the rails 31a and the wall 31c is positioned nearly the same horizontal plane as that of the front higher projection 31 and of the top of the bolt 5 after the LA terminal is fastened.

The rails 33a of the front (on the left side in FIG. 11) higher lock 33 in FIG. 11, is positioned in the middle of the second junction block 4 in a vertical direction, and a lower end of the rails 33a of the back (on the right side in FIG. 11) lower lock 33 is positioned at nearly the same horizontal plain as that of second junction block 4. A lower end of the upward lock arm 33b of the front and rear locks 33,i.e., an upstanding base is positioned slightly upper than that of the each of the rails 33a, and an upper end of each of the locks arm 33b is positioned in the middle of the each of the rails 33a in a vertical direction.

While the front higher locks 31, 33 of the respective junction blocks 3, 4, are slid to engage with each other, the back lower locks 31, 33 are slid to engage with each other. For example, the operator can, when sliding both the junction block 3, 4 to engage, or integrate, engage the back lower lock 33 of the second junction block 4 after the back lower lock 31, thereby the front higher locks 31, 33 of both the junction blocks 3, 4 are automatically positioned and slid to engage, resulting in good workability, ease, and slickness of the slide engagement.

Furthermore, though vertical displacement of both the junction blocks 3, 4, as shown in FIG. 4, incurs concern that engagement force against external force that opens, or separate to each other as shown by the arrow E in FIG. 4, both the junction blocks 3, 4 outward from side to side is debased, vertical displacement of each of the front and rear locks 31, 33 as shown in FIGS. 10, 11 enhances the engagement force against the external force that opens both the junction blocks 3, 4 outward so as to prevent unexpected lock release, or unlock, of both the junction blocks 3, 4.

A reference sign 43 in FIG. 10 shows the first LA terminal with the electric wire 42. Each the LA terminal, or round plate terminal, 43, is arranged in parallel in a front and rear direction, which contains a hole 43a for receiving bolt in the upper vertical electric contact portion 43b, and which is, in a lower pressure bonding part, connected with the electric wire 42. The second LA terminal 7 in FIG. 1 is referred to as LA terminal not because of roundness but because of containing a hole 7f for receiving bolt.

Note that this invention, besides the division block structure of the electric junction box, also effectively serves as an electric junction box itself.

### Industrial Applicability

The electric junction box having divisible block according to the present invention can be used for, i.e., confirming thread-fastening state of the LA terminal while two junction blocks for being accommodated within a frame are integrated.

### Reference Signs List

- 1: electric junction box
- 2: frame
- 3: first junction block
- 4: second junction block
- 7: second terminal with electric wire
- 16: terminal base
- 17: isolation wall
- 24b: terminal
- 31, 33: locks
- 43: first terminal with electric wire
- 44: bolt (thread-fastening member)
- 47: isolation outer wall

## Claims

1. An electric junction box (1) having divisible block comprising:
a frame (2) having an upper opening and a lower opening in a vertical direction;
a first junction block (3) extending in a front-rear direction perpendicular to said vertical direction; and a second junction block (4) accommodated together from side to side in a longitudinal direction perpendicular to said front-rear direction and vertical direction in the frame (2);
a bolt (44) configured for thread-fastening a first terminal (43) with electric wire (42) to a terminal (24b) in the first junction block (3); and
a pair of front and rear locks (31) provided on the first junction block (3) and engaged with a pair of front and rear locks (33) provided on the second junction block (4);
**characterized in that**
the second junction block (4) is positioned to project upper in the vertical direction than the first junction block (3) when engaged with said first junction block (3),
the bolt (44) is positioned below the second junction block (4) in the vertical direction and exposed outward so
as to allow an operator to visually confirm a state of fastening of the terminal (43) and provides a good heat radiation to prevent overheat, and
the pair of front and rear locks (31) provided on the first junction block (3) and the pair of front and rear locks (33) provided on the second junction block (4) are arranged in said front-rear direction such that the front locks (31, 33) are arranged with a vertical displacement (L) from the rear locks (31, 33).

2. The electric junction box having divisible block as claimed in claim 1, wherein a second terminal (7) with electric wire (6) configured to be thread-fastened to a terminal base (16) of the first junction block (3) is surrounded by an isolating wall (17) of the frame (2), said isolating wall (17) of the frame (2) upstanding around the terminal base (16) and positioned adjacent to an isolating outer wall (47) of the second junction block (4).

## Patentansprüche

1. Strom-Anschlusskasten (1) mit teilbarem Block, der umfasst:
einen Rahmen (2), der eine obere Öffnung und eine untere Öffnung in einer vertikalen Richtung hat;
einen ersten Anschlussblock (3), der sich in einer Vorn-Hinten-Richtung senkrecht zu der vertikalen Richtung erstreckt, und einen zweiten Anschlussblock (4), die zusammen nebeneinander in einer Längsrichtung senkrecht zu der Vorn-Hinten-Richtung und der vertikalen Richtung des Rahmens (2) aufgenommen sind;
eine Schraube (44), die zum Anschrauben eines ersten Anschlusses (43) mit Leiter (42) an einem Anschluss (24b) in dem ersten Anschlussblock (3) eingerichtet ist; und
ein Paar aus einer vorderen und einer hinteren Arretierung (31), das sich an dem ersten Anschlussblock (3) befindet und mit einem Paar aus einer vorderen und einer hinteren Arretierung (33) in Eingriff ist, das sich an dem zweiten Anschlussblock (4) befindet;
**dadurch gekennzeichnet, dass**
der zweite Anschlussblock (4) so positioniert ist, dass er in der vertikalen Richtung höher vorsteht als der erste Anschlussblock (3), wenn er mit dem ersten Anschlussblock (3) in Eingriff ist,
die Schraube (44) in der vertikalen Richtung unterhalb des zweiten Anschlussblocks (4) positioniert ist und nach außen freiliegt, so dass eine Bedienungsperson visuell einen Befestigungszustand des Anschlusses (43) prüfen kann und gute Wärmeabstrahlung gewährleistet ist und Überhitzung vermieden wird, und
das Paar aus der vorderen und der hinteren Arretierung (31), das sich an dem ersten Anschlussblock (3) befindet, und das Paar aus der vorderen und der hinteren Arretierung (33), das sich an dem zweiten Anschlussblock (4) befindet, in der Vorn-Hinten-Richtung so angeordnet sind, das die vorderen Arretierungen (31, 33) mit einer vertikalen Verschiebung (L) gegenüber den hinteren Arretierungen (31, 33) angeordnet sind.

2. Strom-Anschlusskasten mit teilbarem Block nach Anspruch 1, wobei ein zweiter Anschluss (7) mit Leiter (6), der zum Anschrauben an einem Anschluss-Sockel (16) des ersten Anschlussblocks (3) eingerichtet ist, von einer isolierenden Wand (17) des Rahmens (2) umgeben ist und die isolierende Wand (17) des Rahmens (2) um den Anschluss-Sockel (16) herum aufrecht vorsteht und an eine isolierende Außenwand (47) des zweiten Anschlussblocks (4) angrenzend positioniert ist.

## Revendications

1. Boîte de raccordement électrique (1) présentant un bloc divisible comprenant :
un cadre (2) présentant une ouverture supérieure et une ouverture inférieure dans un sens vertical ;
un premier bloc de raccordement (3) s'étendant dans un sens avant-arrière perpendiculaire audit sens vertical ; et un second bloc de raccordement (4) logé conjointement depuis un côté à l'autre dans un sens longitudinal perpendiculaire auxdits sens avant-arrière et sens vertical dans le cadre (2) ;
un boulon (44) configuré pour la fixation par filetage d'une première borne (43) avec un câble électrique (42) à une borne (24b) dans le premier bloc de raccordement (3) ; et
une paire de verrous avant et arrière (31) prévue sur le premier bloc de raccordement (3) et en prise avec une paire de verrous avant et arrière (33) prévue sur le second bloc de raccordement (4) ;
**caractérisée en ce que**
le second bloc de raccordement (4) est positionné pour se projeter plus haut dans le sens vertical que le premier bloc de raccordement (3) lorsqu'il se trouve en prise avec ledit premier bloc de raccordement (3),
le boulon (44) est positionné en-dessous du second bloc de raccordement (4) dans le sens vertical et exposé vers l'extérieur afin de permettre à un opérateur de confirmer visuellement un état de fixation de la borne (43) et fournit une bonne irradiation de chaleur pour empêcher la surchauffe, et
la paire de verrous avant et arrière (31) prévue sur le premier bloc de raccordement (3) et la paire de verrous avant et arrière (33) prévue sur le second bloc de raccordement (4) sont disposées dans ledit sens avant-arrière de sorte que les verrous avant (31, 33) soient disposés selon un déplacement vertical (L) depuis les verrous arrière (31, 33).

2. Boîte de raccordement électrique présentant un bloc divisible telle que revendiquée selon la revendication 1, dans laquelle une seconde borne (7) avec câble électrique (6) configurée pour être solidement fixée par filetage à une base de borne (16) du premier bloc de raccordement (3) est entourée d'une paroi isolante (17) du cadre (2), ladite paroi isolante (17) du cadre (2) étant d'aplomb autour de la base de borne (16) et positionnée de manière adjacente à une paroi externe isolante (47) du second bloc de raccordement (4).
